(19) Europäisches Patentamt
European Patent Office
Office européen des brevets

(11) EP 4 039 746 A1

(12) EUROPÄISCHE PATENTANMELDUNG

(43) Veröffentlichungstag:
**10.08.2022 Patentblatt 2022/32**

(21) Anmeldenummer: **21155830.9**

(22) Anmeldetag: **08.02.2021**

(51) Internationale Patentklassifikation (IPC):
***C08L 69/00*** *(2006.01)*

(52) Gemeinsame Patentklassifikation (CPC):
(C-Sets verfügbar)
**C08L 69/00** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM**

(71) Anmelder: **Covestro Deutschland AG**
**51373 Leverkusen (DE)**

(72) Erfinder:
- **Hufen, Ralf**
**47239 Duisburg (DE)**
- **Hobeika, Sven**
**42699 Solingen (DE)**
- **Nolte, Marius**
**51065 Köln (DE)**

(74) Vertreter: **Levpat**
**c/o Covestro AG**
**Gebäude 4825**
**51365 Leverkusen (DE)**

# (54) POLYCARBONAT-POLYESTER ZUSAMMENSETZUNG, FORMMASSE UND FORMKÖRPER MIT GUTER SCHLAGZÄHIGKEIT UND HOHER THERMISCHER BELASTBARKEIT

(57) Die vorliegende Erfindung betrifft eine Zusammensetzung zur Erzeugung einer thermoplastischen Formmasse, wobei die Zusammensetzung die folgenden Bestandteile enthält oder hieraus besteht:
A) mindestens ein Polymer ausgewählt aus der Gruppe bestehend aus Polycarbonat und Polyestercarbonat,
B) mindestens ein Polyester,
C) Phosphorige Säure,
D) mindestens ein Phosphonit,
E) mindestens ein sterisch gehindertes Phenol.

Darüber hinaus betrifft die vorliegende Erfindung ein Verfahren zur Herstellung einer thermoplastischen Formmasse aus der Zusammensetzung, die Formmasse selbst sowie die Verwendung der Zusammensetzung und der Formmasse zur Herstellung von Formkörpern.

EP 4 039 746 A1

(52) Gemeinsame Patentklassifikation (CPC): (Forts.)

C-Sets
**C08L 69/00, C08L 67/02, C08K 3/32,**
**C08K 5/005;**
**C08L 69/00, C08L 67/02, C08K 3/32,**
**C08K 5/5393, C08K 5/13;**
**C08L 69/00, C08L 67/02, C08K 3/32,**
**C08K 5/5393, C08K 5/134**

## Beschreibung

Die vorliegende Erfindung betrifft eine Zusammensetzung auf Basis von Polycarbonat und Polyester zur Erzeugung einer thermoplastischen Formmasse, die Formmasse selbst, die Verwendung der Zusammensetzung oder Formmasse zur Herstellung von Formkörpern und die Formkörper selbst.

Thermoplastische Formmassen enthaltend Polycarbonat und /oder Polyestercarbonat sowie Polyester sind seit langem bekannt.
Sie finden Anwendungen für Bauteile in zahlreichen Industriesegmenten, insbesondere im Automobilbau. Durch Variation der Bestandteile hinsichtlich Art und Menge sowie der Zugabe von weiteren Additiven und polymeren Blendpartnern lassen sich die Eigenschaftsprofile in weiten Bereichen an die Anforderungen der jeweiligen Anwendungen anpassen. Für viele solcher Anwendungen müssen die aus den Formmassen hergestellten Bauteile höhere Temperaturen aushalten und außerdem gute mechanische Eigenschaften wie etwa hohe Zähigkeit bei Schlagbelastung aufweisen.

Bei der Herstellung der Polycarbonat-Polyester Formmassen in der Schmelzecompoundierung und/oder bei der Verarbeitung der Formmassen z.B. im Spritzgussverfahren kommt es häufig zu unerwünschten Umesterungsreaktionen zwischen Polycarbonat und Polyester. Solche Reaktionen treten besonders bei ungünstigen Bedingungen wie hohen Temperaturen, langen Verweilzeiten sowie bei hohen mechanischen Belastungen bei der Schmelzecompoundierung oder im Spritzguss auf.

In der Folge können wichtige Eigenschaften beeinträchtigt werden. So können die Wärmeformbeständigkeit oder Zähigkeit der Formkörper reduziert sein. Außerdem können morphologische Eigenschaften verändert, also das Kristallisations- und Schmelzeverhalten des Polyesters gestört und die Glasübergangstemperatur des Polycarbonats zu niedrigen Werten verschoben sein. Eine schnelle Kristallisation wirkt sich aber günstig auf das Entformungsverhalten bei der Spritzgussverarbeitung aus und verringert damit die Zykluszeiten, so dass die Bauteilherstellung effizienter wird. Weiterhin ist eine ungestörte Kristallisation vorteilhaft für die Beständigkeit gegenüber aggressiven Medien.

Es ist daher anstrebenswert, die Formmassen aus Polycarbonat und Polyester mit einer Additivierung zur Stabilisierung zu versehen.. Dazu finden sich im Stand der Technik zahlreiche Dokumente.

WO 85/02622 offenbart Polycarbonat-Polyester Zusammensetzungen, die mit phosphorbasierten Säuren gegen Vergilbung stabilisiert werden.

DE 2414849 A1 offenbart Mischungen aus Polycarbonat und Polyester, die mit Phosphorverbindungen gegen Verfärbung geschützt sind.

EP 0417421 A1 offenbart sterisch gehinderte Ester der phosphorigen Säure als Stabilisierungsmittel für Polycarbonat-Polyalkylenterephthalat-Zusammensetzungen.

EP 3608358 A1 offenbart Zusammensetzungen enthaltend Polycarbonat, Polyalkylenterephthalat, einen mineralischen Füllstoff und phosphorige Säure als Stabilisator.

US 4088709 A offenbart eine Zusammensetzung, die aus einem Gemisch aus Polytetramethylenterephthalat, Bisphenol A-Polycarbonat und ausgewählten Phosphorverbindungen besteht und sich durch gute mechanische Eigenschaften auszeichnet.

DE 2402367 offenbart eine Polycarbonatzusammensetzung, die gegen Wärmeabbau stabilisiert ist, indem eine geringe Menge eines Phosphits, das entweder ein Diarylhydrogenphosphit, ein Dialkylhydrogenphosphit oder ein Alkylarylhydrogenphosphit oder Gemische davon sein kann, als Stabilisator verwendet wird.

EP 0604074 A1 offenbart Blendzusammensetzungen aus zwei Polyestern, die auch Polycarbonat enthalten können und bei denen die Schmelzeviskosität mit bestimmten Phosphorhaltigen Additiven stabilisiert werden kann.

EP 0114288 A2 offenbart, dass thermoplastische Zusammensetzungen aus einem Polyester- und / oder Polycarbonatharz, einem Acrylkern-Schale-Schlagzähmodifikator und einem Stabilisatorpaket durch ein verbessertes Verfahren bereitgestellt werden, bei dem die Schlagzähmodifikator- und Stabilisatorkomponenten zuerst vorgemischt werden und die Vormischung dann mit dem Polyester und / oder Polycarbonat gemischt wird. Die resultierende Mischungszusammensetzung behält auch ohne die Verwendung hoher Mengen der Stabilisatoren gute Eigenschaften bei.

EP 0604080 offenbart eine Zusammensetzung, die Polybutylenterepthalat oder Polyethylenterephthalat oder Mischungen aus Polybutylenterephthalat und Polyethylenterephthalat, Polycarbonat, anorganischen Füllstoff, einem Stabilisator und gegebenenfalls einem Styrolkautschuk-Schlagzähmodifikator umfasst.

Auch wenn die Stabilisierung von Polycarbonat/Polyester Zusammensetzungen in vielen Dokumenten beschrieben ist, bestand weiterhin Bedarf nach Verbesserungen.

Es war wünschenswert, eine Zusammensetzung zur Erzeugung einer thermoplastischen Formmasse bereitzustellen, bei der die Formmasse sich zur Herstellung von Formkörpern mit verbesserter Schlagzähigkeit eignet.
Weiterhin war es wünschenswert, dass sich die Wärmeformbeständigkeit der Formkörper nur wenig verringert, auch wenn die Formkörper unter ungünstigen Verarbeitungsbedingungen wie sehr hoher Temperatur und/oder sehr langer Verweilzeit hergestellt werden. Es soll also erreicht werden, dass die Wärmeformbeständigkeit von den Verarbeitungsbedingungen nur in möglichst geringer Weise beeinflusst wird und dadurch die Reproduzierbarkeit dieser Eigenschaft verbessert wird. Weiterhin war es wünschenswert, dass die oben genannten Übergangstemperaturen, also die Kristallisationstemperatur des Polyesters, die Schmelztemperatur des Polyesters sowie die Glasübergangstemperatur des Polycarbonats bei möglichst hohen Werten liegen und damit eine gute Phasenseparation erreicht wird.

Überraschend wurde nun gefunden, dass eine Zusammensetzung zur Erzeugung einer thermoplastischen Formmasse, wobei die Zusammensetzung die folgenden Bestandteile enthält oder hieraus besteht:

A) mindestens ein Polymer ausgewählt aus der Gruppe bestehend aus Polycarbonat und Polyestercarbonat,

B) mindestens ein Polyester,

C) Phosphorige Säure,

D) mindestens ein Phosphonit,

E) mindestens ein sterisch gehindertes Phenol.

die gewünschten Eigenschaften aufweist.

Die Zusammensetzung enthält als Komponente F optional mindestens einen mineralischen Füllstoff auf Basis von Talk und ebenso optional als Komponente G mindestens ein Additiv ausgewählt aus der Gruppe bestehend aus Gleit- und Entformungsmitteln, Flammschutzmitteln, Flammschutzsynergisten, Leitfähigkeitsadditiven, UV/Licht-Schutzmitteln, Nukleierungsmitteln, Hydrolyseschutzmitteln, kratzfestigkeitsverbessernden Additiven, IR-Absorbentien, optischen Aufhellern, fluoreszierenden Additiven, Schlagzähmodifikatoren, Farbstoffen und Pigmenten sowie von Komponente F verschiedenen Füll- und Verstärkungsstoffen.

In einer bevorzugten Ausführungsform enthält die Zusammensetzung

40 bis 80 Gew.-%, weiter bevorzugt 45 bis 75 Gew.-%, besonders bevorzugt 50 bis 66 Gew.-% der Komponente A,
15 bis 45 Gew.-%, weiter bevorzugt 18 bis 40, besonders bevorzugt 20 bis 35 Gew.-% der Komponente B,
0,005 bis 0,1 Gew.-%, weiter bevorzugt 0,008 bis 0,06 Gew.-%, besonders bevorzugt 0,01 bis 0,05 der Komponente C,
0,05 bis 1 Gew.-%, weiter bevorzugt 0,08 bis 0,8 Gew.-%, besonders bevorzugt 0,1 bis 0,3 Gew.-% der Komponente D,
0,05 bis 1 Gew.-%, weiter bevorzugt 0,08 bis 0,8 Gew.-%, besonders bevorzugt 0,1 bis 0,3 Gew.-% der Komponente E,
0 bis 25 Gew.-%, weiter bevorzugt 0 bis 20 Gew.-%, besonders bevorzugt 5 bis 20 Gew.-% der Komponente F und
0 bis 20 Gew.-%, weiter bevorzugt 0,1 bis 15 Gew.-%, besonders bevorzugt 0,2 bis 10 Gew.-% der Komponente G.

Alle Angaben zu Gew.-% beziehen sich, soweit nicht anders angegeben, auf die gesamte Zusammensetzung. In einer bevorzugten Ausführungsform besteht die Zusammensetzung zu 90 Gew.-%, weiter bevorzugt zu 95 Gew.-% und besonders bevorzugt zu 100 Gew.-% aus den Komponenten A bis G.
Die einzelnen oben genannten Vorzugsbereiche unterschiedlicher Komponenten und die bevorzugten Ausführungsformen sind frei miteinander kombinierbar.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).
Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (1)

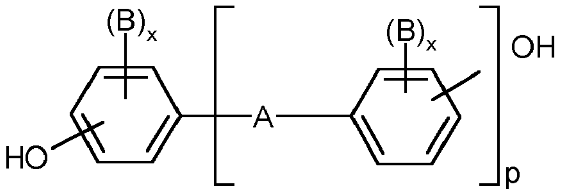

(1),

wobei

A eine Einfachbindung, $C_1$ bis $C_5$-Alkylen, $C_2$ bis $C_5$-Alkyliden, $C_5$ bis $C_6$-Cycloalkyliden, -O-, -SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (2) oder (3)

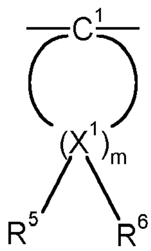

(2)

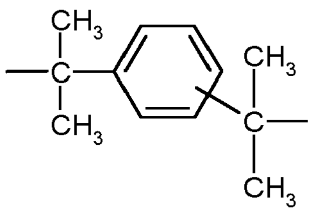

(3)

B jeweils $C_1$ bis $C_{12}$-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kemchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren diund tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Molekulargewichte (Gewichtsmittel $M_w$, gemessen durch GPC (Gelpermeationschromatographie) mit Polycarbonatstandard auf Basis Bisphenol A) von 20 bis 40 kg/mol, vorzugsweise 20 bis 32 kg/mol, besonders bevorzugt 22 bis 28 kg/mol. Durch die bevorzugten Bereiche wird in den erfindungsgemäßen Zusammensetzungen eine besonders vorteilhafte Balance aus mechanischen und rheologischen Eigenschaften erreicht.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen

Gemisch eingesetzt werden.

Bevorzugt wird als Komponente A Polycarbonat auf Basis von Bisphenol A eingesetzt.

Der Anteil der Komponente A in der Zusammensetzung beträgt bevorzugt 40 bis 80 Gew.-%, weiter bevorzugt 45 bis 75 Gew.-%, besonders bevorzugt 50 bis 66 Gew.-%.

## Komponente B

Erfindungsgemäß wird als Komponente B ein Polyester oder eine Mischung von Polyestern eingesetzt.

Die Polyester können Reaktionsprodukte von aromatischen, aliphatischen oder cycloaliphatischen Dicarbonsäuren mit aliphatischen, cycloaliphatischen oder araliphatischen Diolen sein.

Als Diole werden bei der Herstellung der erfindungsgemäßen Polyester beispielsweise Ethylenglykol, Butandiol-1,4 Propandiol-1,3, Tetramethylcyclobutandiol, Isosorbit, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan, 2,2-Bis-(4-hydroxypropoxyphenyl)-propan und deren Mischungen eingesetzt (DE-A 2 407 674, 2 407 776, 2 715 932).

Als cylcoaliphatische Carbonsäure kann beispielsweise Cyclohexandicarbonsäure eingesetzt werden. Ein geeigneter von dieser Säure abgeleiteter Polyester enthält als Diolkomponente Cyclohexandimethanol und wird als PCCD bezeichnet. Ein Verfahren zur Herstellung eines solchen Polyesters ist beispielsweise in US 6455564 B1 beschrieben.

Bevorzugt handelt es sich bei dem Polyester gemäß Komponente D um ein Polyalkylenterephthalat.

Es handelt sich hierbei in bevorzugter Ausführungsform um Reaktionsprodukte aus Terephthalsäure oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Die Polyalkylenterephthalate enthalten also Struktureinheiten abgeleitet von Terephthalsäure und aliphatischen, cycloaliphatischen oder araliphatischen Diolen.

Unter Polyalkylenterephthalate im Sinne der vorliegenden Erfindung sind auch solche Polyester zu verstehen, die neben Terephthalsäureresten anteilig weitere aromatische, aliphatische oder cycloaliphatische Dicarbonsäuren mit bis zu 50 mol-%, vorzugsweise mit bis zu 25 mol-% enthalten. Dies können z.B. aromatische oder cycloaliphatische Dicarbonsäuren mit 8 bis 14 C-Atomen oder aliphatischer Dicarbonsäuren mit 4 bis 12 C-Atomen enthalten, wie z.B. Phthalsäure, Isophthalsäure, Naphthalin-2,6-dicarbonsäure, 4,4'-Diphenyldicarbonsäure, Bernsteinsäure, Adipinsäure, und Cyclohexandicarbonsäure.

Bevorzugt werden nur Terephthalsäure und Isophthalsäure eingesetzt.

Als Diole werden bei der Herstellung der erfindungsgemäßen Polyalkylenterephthalate beispielsweise Ethylenglykol, Butandiol-1,4 Propandiol-1,3, Tetramethylcyclobutandiol, Isosorbit, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1, 1,3,3-tetramethyl-cyclobutan, 2,2-Bis-(4-β-hydroxyethoxy-phenyl)-propan, 2,2-Bis-(4-hydroxypropoxyphenyl)-propan und deren Mischungen eingesetzt (DE-A 2 407 674, 2 407 776, 2 715 932).

Übliche Bezeichnungen dieser Polyalkylenterephthalate sind z.B. PET, PBT, PETG, PCTG, PEICT, PCT oder PTT.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

In einer bevorzugten Ausführungsform werden als Komponente B Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate eingesetzt.

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

In einer besonders bevorzugten Ausführungsform werden als Komponente B Polyethylenterephthalat, Polybutylenterephthalat oder Mischungen dieser Polyester eingesetzt. Am meisten bevorzugt wird Polyethylenterephthalat eingesetzt.

Die vorzugsweise verwendeten Polyalkylenterephthalate besitzen bevorzugt eine intrinsische Viskosität von 0,52 dl/g bis 0,95 dl/g, besonders bevorzugt 0,56 dl/g bis 0,80 dl/g, ganz besonders bevorzugt 0,58 dl/g bis 0,68 dl/g.

Zur Bestimmung der intrinsischen Viskosität wird im Ubbelohde-Viskosimeter zunächst die spezifische Viskosität in Dichloressigsäure gemessen in einer Konzentration von 1 Gew.-% bei 25°C gemäß DIN 53728-3.

Die ermittelte intrinsische Viskosität wird dann berechnet aus der gemessenen spezifischen Viskosität x 0,0006907 + 0,063096 (x bedeutet eine Multiplikation).

Durch die Polyalkylenterephthalate mit der bevorzugten intrinsischen Viskosität wird in den erfindungsgemäßen Zusammensetzungen eine vorteilhafte Balance aus mechanischen und rheologischen Eigenschaften erreicht.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Der Anteil der Komponente B in der Zusammensetzung beträgt bevorzugt 15 bis 45 Gew.-%, weiter bevorzugt 18 bis 40, besonders bevorzugt 20 bis 35 Gew.-%.

## Komponente C

Die Zusammensetzung enthält als Komponente C Phosphorige Säure $H_3PO_3$.
Eine weitere Bezeichnung ist Phosphonsäure. Im Weiteren wird lediglich der Begriff Phosphorige Säure verwendet.
Die phosphorige Säure kann als Feststoff oder als wässrige Lösung verwendet werden. Bevorzugt ist der Einsatz als Feststoff. In den erfindungsgemäßen Zusammensetzungen wird dadurch eine Verbesserung der Stabilität der eingesetzten Polymerkomponenten während der Compoundierung und damit eine Verbesserung der mechanischen Eigenschaften der Zusammensetzung erreicht. Außerdem ist gegenüber einer wässrigen Säurelösung die Dosierung in das Compoundierungsaggregat erleichtert und es reduziert sich zusätzlich das Risiko einer möglichen Korrosion der Maschinenteile deutlich.

Die Komponente C kann auch an einem organischen oder anorganischen Adsorber oder Absorber gebunden und in dieser Form eingesetzt werden. Dazu wird beispielsweise vor der Compoundierung der Zusammensetzung die Komponente C mit dem Adsorber oder Absorber vorgemischt, bis ein rieselfähiges Pulver entsteht. Bei diesen Absorbern oder Adsorbern handelt es sich bevorzugt um feinteilige und/oder poröse Materialien mit großer äußerer und/oder innerer Oberfläche.

Bevorzugt handelt es sich bei diesen Materialien um thermisch inerte anorganische Materialien wie beispielsweise Oxide oder Mischoxide, Silikate, Silika, Sulfide, Nitride von Metallen beziehungsweise Übergangsmetallen. In einer besonders bevorzugten Ausführungsform handelt es sich dabei um feinteilige und/oder mikroporöse Kieselsäuren beziehungsweise Siliziumoxide oder Silikate natürlichen oder synthetischen Ursprungs.

Es ist weiterhin möglich, dass die phosphorige Säure in Form eines Masterbatches auf Basis Polycarbonat oder Polyester eingesetzt wird. Masterbatch bedeutet, dass die phosphorige Säure in gegenüber der geplanten Einsatzkonzentration in der Zusammensetzung höherer Menge mit dem Thermoplasten (Polycarbonat oder Polyester) vorgemischt wird. Diese Mischung wird dann der Zusammensetzung in einer entsprechenden Menge zugegeben, so dass die gewünschte Säurekonzentration in der Zusammensetzung erreicht wird.

Der Anteil der Komponente C in der Zusammensetzung beträgt bevorzugt 0,005 bis 0,1 Gew.-%, weiter bevorzugt 0,008 bis 0,06 Gew.-%, besonders bevorzugt 0,01 bis 0,05 Gew.-%.

## Komponente D

Die Zusammensetzung enthält als Komponente D ein Phosphonit. Es können auch Mischungen mehrerer solcher Komponenten eingesetzt werden.

Phosphonite leiten sich von der Phosphonigen Säure $HP(OH)_2$ ab und haben die folgende allgemeine Struktur (4)

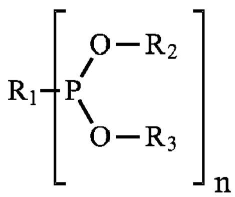

(4)

wobei

n für 1, 2, 3 oder 4 steht,
$R_1$, $R_2$ und $R_3$ unabhängig voneinander $C_1$- $C_{60}$-Alkyl, $C_6$ - $C_{12}$-Aryl und $C_5$ - $C_{12}$ Cycloalkyl und Wasserstoff bedeuten können, wobei die genannten Reste jeweils durch Aryl, Alkyl, Aryloxy, Alkyloxy, Heteroatome und/oder

Heterocyclen substituiert sein können, wobei $R_2$ und $R_3$ nicht gleichzeitig Wasserstoff sein können.

Bevorzugt sind die Reste mit $C_1$ - Cs-Alkyl, verzweigtem $C_1$ - Cs-Alkyl, oder Cumyl substituiert, wobei die Substituenten gleich oder verschieden sein können.

Handelt es sich bei den Resten um Arylreste, so sind diese bevorzugt in den Positionen 2 und 4 oder 2, 4 und 6 substituiert. Ganz besonders bevorzugt sind tert-Butylsubstituenten in diesen Positionen.

Bei den Phosphoniten kann es sich um einkernige (n=1) oder mehrkernige (n= 2, 3 oder 4), aliphatisch, cycloaliphatisch und/oder aromatisch substituierte Phosphonite handeln.

Unter "mehrkernigen" Phosphoniten werden solche verstanden, die innerhalb eines Moleküls mehrere Phosphonitgruppen tragen, also einfach organisch substituierte Phosphoratome, die wiederum zwei organisch substituierte Sauerstoffatome tragen.

Alternative Bezeichnungen für die Struktur (4) sind "Hypophosphorigsäure-ester" oder auch "Phosphonigsäureester".

Insbesondere bevorzugt als Komponente D wird die Substanz gemäß Struktur (5) eingesetzt.

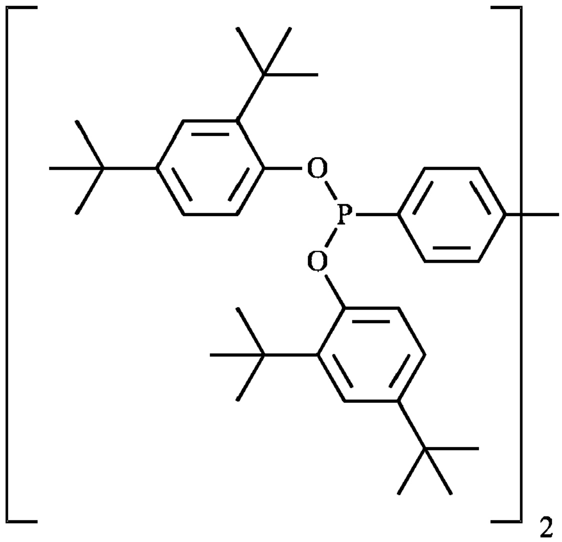

(5)

In Komponente D) können neben der Struktur (5) auch weitere davon isomere Strukturen vorhanden sein, wobei die Struktur (5) die Hauptkomponente darstellt.

Die Verbindung (5) ist als CAS: 119345-01-6 klassifiziert und kommerziell unter dem Namen Irgafos™ P-EPQ der Firma BASF (Deutschland) verfügbar.

Der Anteil der Komponente D in der Zusammensetzung beträgt bevorzugt 0,05 bis 1 Gew.-%, weiter bevorzugt 0,08 bis 0,8 Gew.-%, besonders bevorzugt 0,1 bis 0,3 Gew.-%.

## Komponente E

Die Zusammensetzung enthält als Komponente E ein sterisch gehindertes Phenol. Auch Mischungen mehrerer solcher Komponenten können eingesetzt werden.

Bevorzugt handelt es sich dabei um eine Verbindung der allgemeinen Struktur (6a) oder (6b)

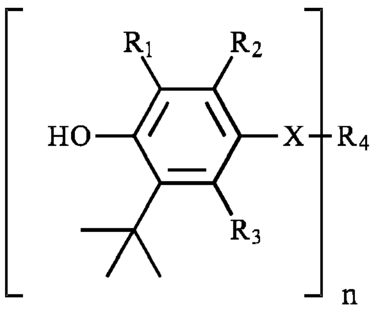

(6a)

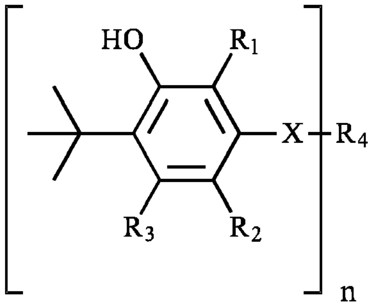

(6b)

wobei n 1, 2, 3 oder 4 bedeutet,

$R_1$, $R_2$ und $R_3$ jeweils unabhängig voneinander für $C_1$- bis $C_4$-Alkyl oder Wasserstoff stehen

X für eine direkte Bindung oder einen organischen Rest mit $C_1$- bis $C_{60}$- steht und der organische Rest Sauerstoff und/oder Stickstoff enthalten kann.

$R_4$ für eine direkte Bindung, Kohlenstoff, $C_1$-$C_8$ Alkyl, Aryl oder eine Struktur gemäß Formel (7a) (7b) oder (7c) steht.

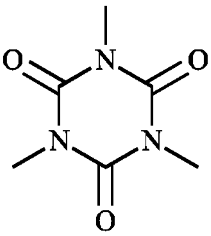

(7a)

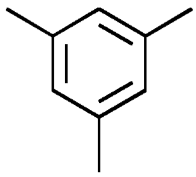

(7b)

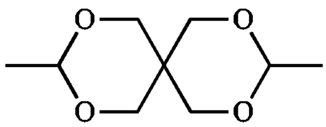

(7c)

Besonders bevorzugt ist die Komponente E ausgewählt aus mindestens einer Verbindung gemäß den Strukturen (8) und (9).

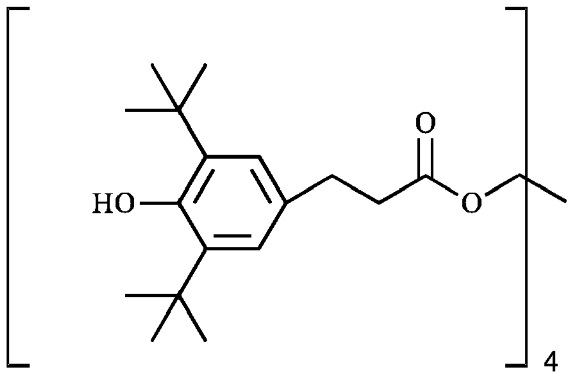

(8)

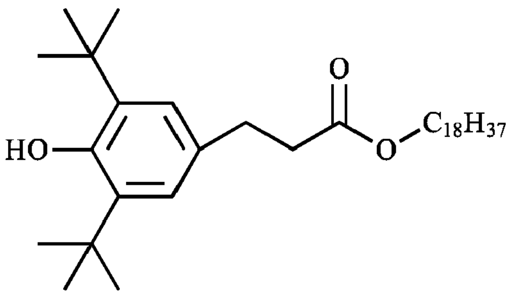

(9)

Die Verbindung (8) ist als CAS: 6683-19-8 klassifiziert und kommerziell unter dem Namen Irganox™ 10 10 der Firma BASF(Deutschland) verfügbar.

Die Verbindung (9) ist als CAS: 2082-79-3 klassifiziert und kommerziell unter dem Namen Irganox™ 1076 der Firma BASF(Deutschland) verfügbar.

Der Anteil der Komponente E in der Zusammensetzung beträgt bevorzugt 0,05 bis 1 Gew.-%, weiter bevorzugt 0,08 bis 0,8 Gew.-%, besonders bevorzugt 0,1 bis 0,3 Gew.-%.

## Komponente F

Als Komponente F kann die thermoplastischen Formmasse optional mindestens einen mineralischen Füllstoff auf Basis von Talk als Verstärkungsstoff enthalten.
In bevorzugter Ausführungsform ist ein mineralischer Füllstoff auf Basis von Talk alleiniger Verstärkungsstoff.

Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, in Frage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-%, bezogen auf die Gesamtmasse an Füllstoff aufweisen.

Unter Talk wird ein natürlich vorkommender oder synthetisch hergestellter Talk verstanden. Reiner Talk hat die chemische Zusammensetzung $3\,MgO{\cdot}4\,SiO_2{\cdot}H_2O$ und somit einen MgO-Gehalt von 31,9 Gew.-%, einen $SiO_2$-Gehalt von 63,4 Gew.-% und einen Gehalt an chemisch gebundenem Wasser von 4,8 Gew.-%, jeweils bezogen auf den Talk. Es handelt sich um ein Silikat mit Schichtstruktur.
Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Besonders bevorzugte als Komponente F zum Einsatz kommende Talksorten zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%, jeweils bezogen auf den Talk.

Die besonders bevorzugten Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, jeweils bezogen auf den Talk, aus.

Vorteilhaft und insofern bevorzugt ist insbesondere auch der Einsatz des erfindungsgemäßen Talkes in Form von feinvermahlenen Typen mit einer mittleren Teilchengröße dso von 0,1 bis 20 μm, bevorzugt 0,2 bis 10 μm, weiter bevorzugt 0,5 bis 5 μm, noch weiter bevorzugt 0,7 bis 2,5 μm, und besonders bevorzugt 1,0 bis 2,0 μm.

Die erfindungsgemäß einzusetzenden mineralischen Füllstoffe auf Basis von Talk haben bevorzugt eine obere Teilchen- bzw. Korngröße $d_{95}$ kleiner 10 μm, bevorzugt kleiner 7 μm, besonders bevorzugt kleiner 6 μm und insbesondere bevorzugt kleiner 4,5 μm. Die $d_{95}$- und dso-Werte von den Füllstoffen werden nach Sedimentationsanalyse mit SEDIGRAPH D 5 000 nach ISO 13317-3 bestimmt.
Die mineralischen Füllstoffe auf Basis von Talk können optional oberflächenbehandelt sein, um eine bessere Ankopplung an die Polymermatrix zu erzielen. Sie können beispielsweise mit einem Haftvermittlersystem auf Basis funktionalisierter Silane ausgerüstet sein.

Das mittlere Aspektverhältnis (Durchmesser zu Dicke) der teilchenförmigen Füllstoffe liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Die teilchenförmigen Füllstoffe können bedingt durch die Verarbeitung zur Formmasse bzw. zu Formkörpern in der Formmasse bzw. im Formkörper einen kleineren $d_{95}$- bzw. dso-Wert aufweisen, als die ursprünglich eingesetzten Füllstoffe.

Der Anteil der Komponente F in der Zusammensetzung beträgt bevorzugt 0 bis 25 Gew.-%, weiter bevorzugt 0 bis 20 Gew.-%, besonders bevorzugt 5 bis 20 Gew.-%.

## Komponente G

Die Zusammensetzung kann als Komponente G handelsübliche Polymeradditive enthalten.
Als handelsübliche Polymeradditive gemäß Komponente E kommen Additive wie beispielsweise interne und externe

Gleit- und Entformungsmittel (beispielsweise Pentaerythrittetrastearat, Montanwachs oder Polyethylenwax), Flammschutzmittel, Flammschutzsynergisten, Leitfähigkeitsadditive (beispielsweise Leitruß oder Carbon Nanotubes), UV/Licht-Schutzmittel, Nukleierungsmittel (z.B. Natriumphenylphosphinat, Aluminiumoxid, Siliziumdioxid, Salze aromatischer Carbonsäuren), Hydrolyseschutzmittel, kratzfestigkeitsverbessernde Additive (beispielsweise Silikonöle), IR-Absorbentien, optische Aufheller, fluoreszierende Additive, Schlagzähmodifikatoren (mit oder ohne Kern-Schale Struktur), weitere polymere Blendpartner, sowie Farbstoffe und Pigmente (beispielsweise Titandioxid, Ultramarinblau, Eisenoxid, Ruß, Phthalocyanine, Chinacridone, Perylene, Nigrosin und Anthrachinone) und Füll- und Verstärkungsstoffe (verschieden von Komponente F), oder aber Mischungen mehrerer der genannten Additive in Frage.

Der weitere Verstärkungsstoff ist bevorzugt ausgewählt aus der Gruppe bestehend aus Glimmer, Silikat, Quarz, Titandioxid, Kaolin, amorphe Kieselsäuren, Magnesiumcarbonat, Kreide, Feldspat, Bariumsulfat, Glaskugeln, Keramikkugeln, Wollastonit und Glasfasern.

Die erfindungsgemäßen Zusammensetzungen enthalten bevorzugt mindestens ein Entformungsmittel, vorzugsweise Pentaerythrittetrastearat.

In einer bevorzugten Ausführungsform enthält die Zusammensetzung als Komponente G mindestens einen Zusatzstoff ausgewählt aus der Gruppe, die, Gleit- und Entformungsmittel, UV/Licht-Schutzmittel, Antistatika, Farbstoffe, Pigmente und Füll- und Verstärkungsstoffe (verschieden von Komponente F) umfasst.

Die Additive können alleine oder in Mischung bzw. in Form von Masterbatchen eingesetzt werden.

In einer bevorzugten Ausführungsform ist die Zusammensetzung frei von weiteren, von Komponente F verschiedenen Füll- und Verstärkungsstoffen.

In einer bevorzugten Ausführungsform ist die Zusammensetzung frei von kautschukmodifizierten Pfropfpolymerisaten.

In einer bevorzugten Ausführungsform ist die Zusammensetzung frei von Vinyl(Co)-polymerisaten, insbesondere SAN (Styrol-Acrylnitril).

In einer bevorzugten Ausführungsform ist die Zusammensetzung frei von phosphorbasierten Flammschutzmitteln.

Frei von einer Komponente bedeutet, dass weniger als 0,5 Gew.-%, bevorzugt weniger als 0,1 Gew.-%, insbesondere bevorzugt 0 Gew.-% dieser Komponente in der Zusammensetzung enthalten sind.

Der Anteil der Komponente G in der Zusammensetzung beträgt bevorzugt 0 bis 20 Gew.-%, weiter bevorzugt 0,1 bis 15 Gew.-%, besonders bevorzugt 0,2 bis 10 Gew.-%.

## Herstellung der Formmassen und Formkörper

Aus den erfindungsgemäßen Zusammensetzungen können thermoplastische Formmassen hergestellt werden. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 200°C bis 320°C, besonders bevorzugt bei 240 bis 310°C, ganz besonders bevorzugt bei 260°C bis 300°C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die erfindungsgemäßen Formmassen können zur Herstellung von Formkörpern und Halbzeugen jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Besonders eignen sich die erfindungsgemäßen Formmassen zur Verarbeitung in Extrusions-, Blasform- und Tiefziehverfahren.

Als Beispiele für Halbzeuge seien Platten genannt.

Es ist auch möglich, die Bestandteile der Zusammensetzungen direkt in eine Spritzgussmaschine oder in ein Extrusionsaggregat zu dosieren und zu Formkörper zu verarbeiten.

Beispiele für solche Formkörper, die aus den erfindungsgemäßen Zusammensetzungen und Formmassen hergestellt werden können, sind Folien, Profile, Gehäuseteile jeder Art, für Büromaschinen wie Monitore, Flatscreens, Notebooks, Drucker, Kopierer; Platten, Rohre, Elektroinstallationskanäle, Fenster, Türen und weitere Profile für den Bausektor sowie Elektro- und Elektronikteile wie Schalter, Stecker und Steckdosen und Bauteile für Fahrzeuge, insbesondere für den Automobilbereich. Die erfindungsgemäßen Zusammensetzungen und Formmassen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Die vorliegende Erfindung betrifft weiterhin aus den oben genannten Zusammensetzungen hergestellte Formkörper, vorzugsweise flächige Formteile wie Platten und Karosserieteile wie Spiegelgehäuse, Kotflügel, Spoiler, Hauben, etc.

Die Formkörper können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden.

Formkörper bzw. Halbzeuge aus den erfindungsgemäßen Formmassen/Zusammensetzungen können sich auch im Verbund mit weiteren Werkstoffen wie z.B. Metall oder Kunststoff befinden. Nach einer eventuellen Lackierung von z.B. Karosserieaußenteilen können sich Lackschichten direkt auf den erfindungsgemäßen Formmassen und/oder auf den im Verbund eingesetzten Werkstoffen befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkststoffen oder sich selbst für die Herstellung von Fertigteilen wie z.B. Karosserieaußenteilen eingesetzt werden.

Nachfolgend werden weitere Ausführungsformen 1 bis 40 der vorliegenden Erfindung beschrieben:

1. Zusammensetzung zur Erzeugung einer thermoplastischen Formmasse, wobei die Zusammensetzung die folgenden Bestandteile enthält:

   A) mindestens ein Polymer ausgewählt aus der Gruppe bestehend aus Polycarbonat und Polyestercarbonat,

   B) mindestens ein Polyester,

   C) phosphorige Säure,

   D) mindestens ein Phosphonit,

   E) mindestens ein sterisch gehindertes Phenol.

2. Zusammensetzung gemäß Ausführungsform 1, dadurch gekennzeichnet, dass die Komponente A ein aromatisches Polycarbonat ist und ein gewichtsgemitteltes Molekulargewicht $M_w$ bestimmt durch Gelpermeationschromatographie in Methlylenchlorid mit Polycarbonat auf Basis von Bisphenol A als Standard von 22 bis 28 kg/mol aufweist.

3. Zusammensetzung gemäß Ausführungsform 1 oder 2, dadurch gekennzeichnet, dass Komponente A ein aromatisches Polycarbonat auf Basis von Bisphenol A ist.

4. Zusammensetzung gemäß einer der vorherigen Ausführungsformen, dadurch gekennzeichnet, dass die Komponente B Struktureinheiten abgeleitet von Terephthalsäure und bis zu 50 Mol.-% Struktureinheiten von Phthalsäure, Isophthalsäure, Naphthalin-2,6-dicarbonsäure, 4,4'-Diphenyldicarbonsäure, Bernsteinsäure, Adipinsäure, und Cyclohexandicarbonsäure enthält.

5. Zusammensetzung gemäß einer der vorherigen Ausführungsformen, dadurch gekennzeichnet, dass die Komponente B keine Struktureinheiten von einer anderen Säure außer Terephthalsäure und Isophthalsäure enthält.

6. Zusammensetzung gemäß einer der vorherigen Ausführungsformen, dadurch gekennzeichnet, dass die Komponente B keine Struktureinheiten von einer anderen Säure außer Terephthalsäure enthält.

7. Zusammensetzung gemäß einer der vorherigen Ausführungsformen, dadurch gekennzeichnet, dass die Komponente B Struktureinheiten abgeleitet von Ethylenglykol, Butdandiol-1,4, Propandiol, Cyclohexan-dimethanol 1,4, Tetramethylcyclobutandiol und Isosorbit enthält.

8. Zusammensetzung gemäß einer der vorherigen Ausführungsformen, dadurch gekennzeichnet, dass Komponente B ausgewählt ist aus der Gruppe bestehend aus Polyethylenterephthalaten und Polybutylenterephthalaten.

9. Zusammensetzung gemäß einer der vorherigen Ausführungsformen, dadurch gekennzeichnet, dass als Komponente B ein Polyethylenterephthalat mit einer intrinsischen Viskosität von 0,52 dl/g bis 0,95 dl/g eingesetzt wird.

10. Zusammensetzung gemäß einer der vorherigen Ausführungsformen, dadurch gekennzeichnet, dass als Komponente B ein Polyethylenterephthalat mit einer intrinsischen Viskosität von 0,56 dl/g bis 0,80 dl/g eingesetzt wird.

11. Zusammensetzung gemäß einer der vorherigen Ausführungsformen, dadurch gekennzeichnet, dass als Komponente B ein Polyethylenterephthalat mit einer intrinsischen Viskosität von 0,58 dl/g bis 0,68 dl/g eingesetzt wird.

12. Zusammensetzung gemäß einer der vorhergehenden Ausführungsformen, enthaltend

40 bis 80 Gew.-% der Komponente A,
15 bis 45 Gew.-% der Komponente B,
0,005 bis 0,1 Gew.-% der Komponente C,
0,05 bis 1 Gew.-% der Komponente D,
0,05 bis 1 Gew.-% der Komponente E,
F) 0 bis 25 Gew.-% eines mineralischen Füllstoffs auf Basis von Talk und
G) 0 bis 20 Gew.-% mindestens eines Additivs ausgewählt aus der Gruppe bestehend aus Gleit- und Entformungsmitteln, Flammschutzmitteln, Flammschutzsynergisten, Leitfähigkeitsadditiven, UV/Licht-Schutzmitteln, Nukleierungsmitteln, Hydrolyseschutzmitteln, kratzfestigkeitsverbessernden Additiven, IR-Absorbentien, optischen Aufhellern, fluoreszierenden Additiven, Schlagzähmodifikatoren, Farbstoffen und Pigmenten sowie von Komponente F verschiedenen Füll- und Verstärkungsstoffen.

13. Zusammensetzung gemäß einer der vorhergehenden Ausführungsformen, dadurch gekennzeichnet, dass der Anteil der Komponente A in der Zusammensetzung 40 bis 80 Gew.-%, weiter bevorzugt 45 bis 75 Gew.-%, besonders bevorzugt 50 bis 66 Gew.-% beträgt.

15. Zusammensetzung gemäß einer der vorhergehenden Ausführungsformen, dadurch gekennzeichnet, dass der Anteil der Komponente B in der Zusammensetzung 15 bis 45 Gew.-%, weiter bevorzugt 18 bis 40, besonders bevorzugt 20 bis 35 Gew.-% beträgt.

15. Zusammensetzung gemäß einer der vorhergehenden Ausführungsformen, dadurch gekennzeichnet, dass der Anteil der Komponente C in der Zusammensetzung 0,005 bis 0,1 Gew.-%, weiter bevorzugt 0,008 bis 0,06 Gew.-%, besonders bevorzugt 0,01 bis 0,05 Gew.-% beträgt.

16. Zusammensetzung gemäß einer der vorhergehenden Ausführungsformen, dadurch gekennzeichnet, dass der Anteil der Komponente D in der Zusammensetzung 0,05 bis 1 Gew.-%, weiter bevorzugt 0,08 bis 0,8 Gew.-%, besonders bevorzugt 0,1 bis 0,3 Gew.-% beträgt.

17. Zusammensetzung gemäß einer der vorhergehenden Ausführungsformen, dadurch gekennzeichnet, dass der Anteil der Komponente E in der Zusammensetzung 0,05 bis 1 Gew.-%, bevorzugt 0,08 bis 0,8 Gew.-%, weiter bevorzugt 0,1 bis 0,3 Gew.-% beträgt.

18. Zusammensetzung gemäß einer der vorhergehenden Ausführungsformen, dadurch gekennzeichnet, dass der Anteil der Komponente F in der Zusammensetzung 0 bis 25 Gew.-%, weiter bevorzugt 0 bis 20 Gew.-%, besonders bevorzugt 5 bis 20 Gew.-% beträgt.

19. Zusammensetzung gemäß einer der vorhergehenden Ausführungsformen, dadurch gekennzeichnet, dass der Anteil der Komponente G in der Zusammensetzung 0 bis 20 Gew.-%, weiter bevorzugt 0,1 bis 15 Gew.-%, besonders bevorzugt 0,2 bis 10 Gew.-% beträgt.

20. Zusammensetzung gemäß einer der vorhergehenden Ausführungsformen, enthaltend

50 bis 66 Gew.-% der Komponente A,
20 bis 35 Gew.-% der Komponente B,
0,01 bis 0,05 Gew.-% der Komponente C,
0,1 bis 0,3 Gew.-% der Komponente D,
0,1 bis 0,3 Gew.-% der Komponente E,

5 bis 20 Gew.-% der Komponente F und
0,2 bis 10 Gew.-% der Komponente G.

21. Zusammensetzung gemäß einer der vorhergehenden Ausführungsformen, dadurch gekennzeichnet, dass Komponente C als Feststoff eingesetzt wird.

22. Zusammensetzung gemäß einer der vorherigen Ausführungsformen, dadurch gekennzeichnet, dass Komponente C an einem organischen oder anorganischen Adsorber oder Absorber gebunden eingesetzt wird.

23. Zusammensetzung gemäß Ausführungsform 20, dadurch gekennzeichnet, dass Komponente C auf Silika gebunden eingesetzt wird.

24. Zusammensetzung gemäß einer der vorhergehenden Ausführungsformen, dadurch gekennzeichnet, dass als Komponente D die Verbindung gemäß Struktur (5) eingesetzt wird.

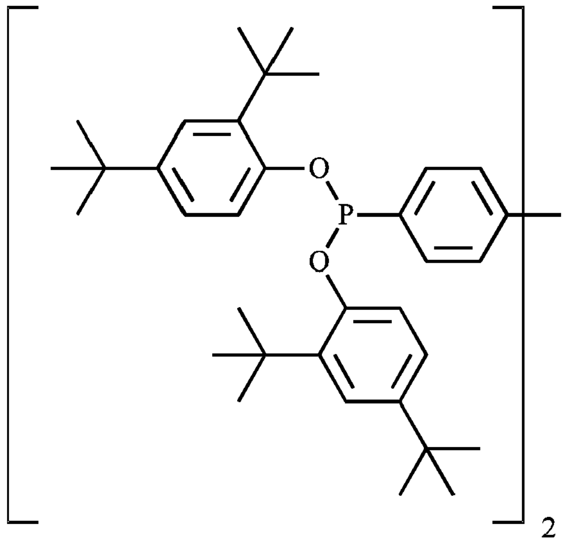

(5)

25. Zusammensetzung gemäß einer der vorhergehenden Ausführungsformen, dadurch gekennzeichnet, dass Komponente E ausgewählt ist aus mindestens einer Verbindung gemäß den Strukturen (8) und (9)

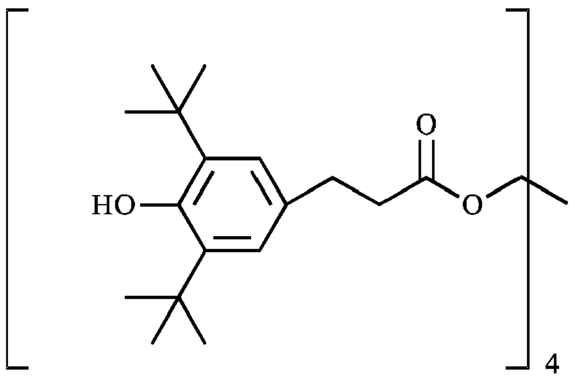

(8)

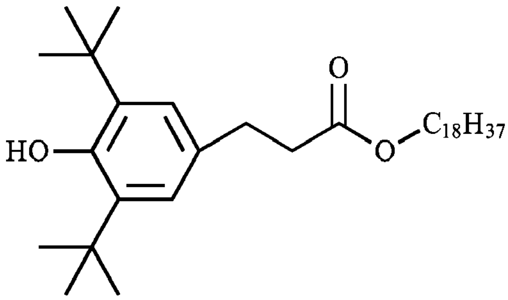

(9)

26. Zusammensetzung gemäß einer der vorherigen Ausführungsformen, dadurch gekennzeichnet, dass als Komponente F ein Talk mit einem $Al_2O_3$-Gehalt von weniger als 0,7 Gew.-% eingesetzt wird

27. Zusammensetzung gemäß einer der vorhergehenden Ausführungsformen, dadurch gekennzeichnet, dass die Komponente F eine obere Korngröße $d_{95}$ kleiner 6 $\mu$m aufweist.

28. Zusammensetzung gemäß einer der vorhergehenden Ausführungsformen enthaltend keine von Komponente F verschiedene Füll- und Verstärkungsstoffe.

29. Zusammensetzung gemäß einer der vorherigen Ausführungsformen, dadurch gekennzeichnet, dass die Zusammensetzung frei ist von kautschukmodifizierten Pfropfpolymerisaten.

30. Zusammensetzung gemäß einer der vorherigen Ausführungsformen, dadurch gekennzeichnet, dass die Zusammensetzung frei ist von Vinyl(Co)-polymerisaten.

31. Zusammensetzung gemäß einer der vorherigen Ausführungsformen, dadurch gekennzeichnet, dass die Zusammensetzung frei ist von Styrol-Acrylnitril Copolymeren.

32. Zusammensetzung gemäß einer der vorherigen Ausführungsformen, dadurch gekennzeichnet, dass die Zusammensetzung frei ist von phosphorbasierten Flammschutzmitteln.

33. Zusammensetzung gemäß einer der vorherigen Ausführungsformen, dadurch gekennzeichnet, dass die Zusammensetzung frei ist von Carbonfasern.

34. Zusammensetzung gemäß einer der vorhergehenden Ausführungsformen bestehend zu 90 Gew.-% aus den Komponenten A bis G.

35. Zusammensetzung gemäß einer der vorhergehenden Ausführungsformen bestehend zu 95 Gew.-% aus den Komponenten A bis G.

36. Zusammensetzung gemäß einer der vorhergehenden Ausführungsformen bestehend aus den Komponenten A bis G.

37. Verfahren zur Herstellung einer Formmasse, dadurch gekennzeichnet, dass die Bestandteile einer Zusammensetzung nach einer der Ausführungsformen 1 bis 36 bei einer Temperatur von 200 bis 320 °C miteinander vermischt und anschließend abgekühlt und granuliert werden.

38. Formmasse, erhältlich nach einem Verfahren nach Ausführungsform 37.

39. Verwendung einer Zusammensetzung nach einer der Ausführungsformen 1 bis 36 oder einer Formmasse nach Ausführungsform 37 zur Herstellung von Formkörpern.

40. Formkörper, erhältlich aus einer Zusammensetzung nach einer der Ausführungsformen 1 bis 36 oder aus einer Formmasse nach Ausführungsform 38.

## Beispiele

### Komponente A-1

Lineares Polycarbonat auf Basis Bisphenol-A mit einem Molekulargewicht von 24 kg/mol (Gewichtsmittel $M_w$, gemessen durch GPC (Gelpermeationschromatographie) mit Polycarbonatstandard auf Basis Bisphenol A).

### Komponente A-2

Lineares Polycarbonat auf Basis Bisphenol-A mit einem Molekulargewicht von 28 kg/mol (Gewichtsmittel $M_w$, gemessen durch GPC (Gelpermeationschromatographie) mit Polycarbonatstandard auf Basis Bisphenol A).

### Komponente B-1

Polyethylenterephthalat (z.B. PET der Fa. Invista, Deutschland) mit einer intrinsischen Viskosität von 0,623 dl/g. Die spezifische Viskosität wird gemessen in Dichloressigsäure in einer Konzentration von 1 Gew.-% bei 25°C. Die intrinsische Viskosität wird aus der spezifischen Viskosität gemäß nachstehender Formel berechnet.

$$\text{Intrinsische Viskosität} = \text{Spezifische Viskosität} \times 0{,}0006907 + 0{,}063096$$

### Komponente B-2

Polyethylenterephthalat (z.B. PET der Fa. Invista, Deutschland) mit einer intrinsischen Viskosität von 0,664 dl/g. Die spezifische Viskosität wird gemessen in Dichloressigsäure in einer Konzentration von 1 Gew.-% bei 25°C. Die intrinsische Viskosität wird aus der spezifischen Viskosität gemäß nachstehender Formel berechnet.

$$\text{Intrinsische Viskosität} = \text{Spezifische Viskosität} \times 0{,}0006907 + 0{,}063096$$

### Komponente C-1

Phosphorige Säure $H_3PO_3$ als Feststoff, Sigma-Aldrich Chemie GmbH (Deutschland)

### Komponente C-2 (Vergleich)

$Zn(H_2PO_4)_2$, Budit™ T21, Budenheim (Deutschland)

### Komponente D-1

Dimeres Phosphonit gemäß Struktur (5), Tetrakis(2,4-di-tert-butylphenyl)-1,1-biphenyl-4,4'-diylbisphosphonit, Irgafos™ P-EPQ, BASF (Deutschland)

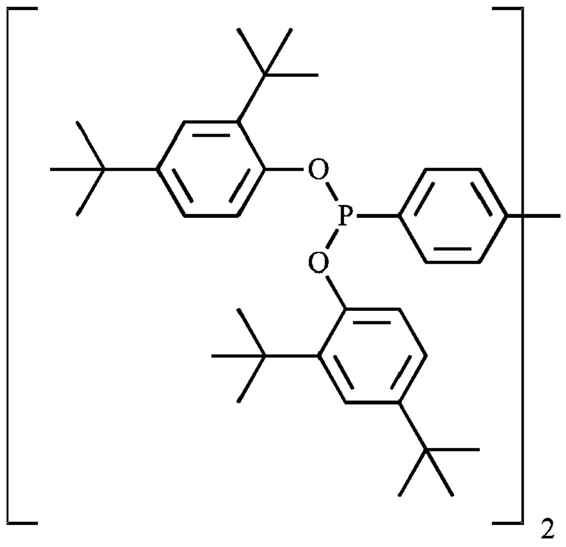

(5)

**Komponente D-2 (Vergleich):**

Phosphitstabilisator gemäß Struktur (10), Irgafos™ 168, Tris(2,4-di-tert-butyl-phenyl)-phosphit); BASF (Deutschland)

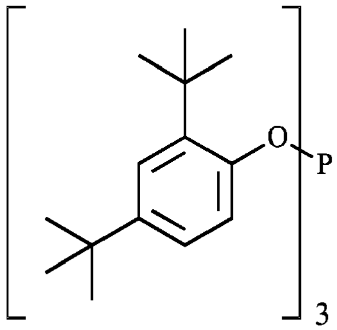

(10)

**Komponente E-1**

Sterisch gehindertes Phenol gemäß Struktur (8), Irganox™ 1010, Pentaerythritol tetrakis(3-(3,5-ditert-butyl-4-hydroxyphenyl)propionat), BASF (Deutschland)

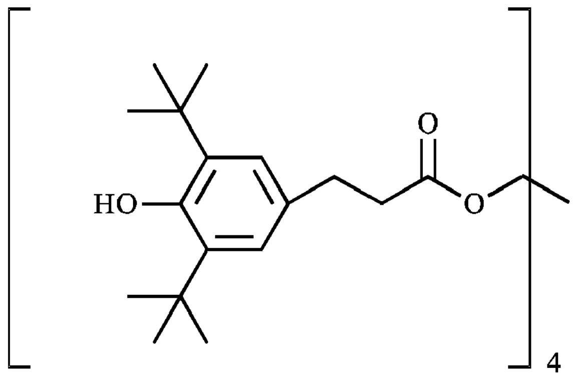

(8)

**Komponente E-2**

Sterisch gehindertes Phenol gemäß Struktur (9), Irganox™ 1076, Octadecyl-3-[3,5-di-tert-butyl-4-hydroxyphenyl]propionat], BASF (Deutschland)

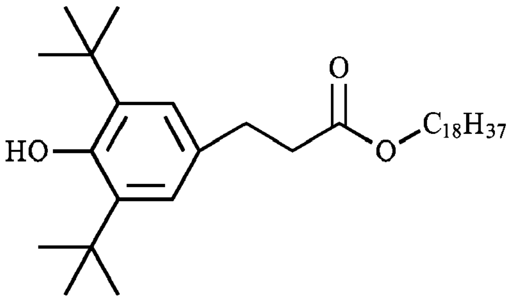

(9)

**Komponente F**

Talk mit einem mittleren Partikeldurchmesser dso von 1,2 μm und einem $d_{95}$ von 3,5 μm gemessen mittels Sedigraph und mit einem $Al_2O_3$-Gehalt von 0,5 Gew.-%, Jetfine™ 3CA der Firma Imerys Talc (Österreich)

**Komponente G-1**

Pentaerythrittetrastearat als Entformungsmittel, Cognis Oleochemicals GmbH (Deutschland)

**Komponente G-2**

Montansäureesterwachs (Licowax™E) als Gleit-/Entformungsmittel

**Komponente G-3**

Ruß, Black Pearls™ 800, Cabot

**Herstellung der Formmassen**

Die erfindungsgemäßen Formmassen, enthaltend die Komponenten A bis E werden hergestellt auf einem Doppelwellenextruder ZSK25 der Fa. Coperion, Werner und Pfleiderer (Deutschland) bei Schmelzetemperaturen von 270°C.

**Herstellung der Prüfkörper und Prüfung**

Die aus der jeweiligen Compoundierung resultierenden Granulate wurden auf einer Spritzgussmaschine (z. B. Fa. Arburg) bei einer Schmelzetemperatur von 270°C und einer Werkzeugtemperatur von 70°C zu Probekörpern verarbeitet.

Die Wärmeformbeständigkeit wurde gemessen gemäß DIN ISO 306 (Vicat-Erweichungstemperatur, Verfahren B mit 50 N Belastung und einer Heizrate von 120 K/h, Version von 2013) an einem einseitig angespritzten Prüfstab der Dimension 80x10x4 mm, hergestellt bei 270°C und einer Verweilzeit von 43 s. Weiterhin wurde eine Vicat-Erweichungstemperatur gemessen an Prüfstäben, die bei 300°C mit einer Verweilzeit von 129 s hergestellt wurden. Angegeben ist jeweils die Differenz Delta Vicat = Vicat (Prüfkörper 270°C, 43 s Verweilzeit) - Vicat (Prüfkörper 300 °C, 129 s Verweilzeit) als Maß für die thermische Belastbarkeit.

Die Bestimmung der Schlagzähigkeit erfolgt gemäß ISO 180/1U (Version von 1982) bei Raumtemperatur (23°C) durch eine 10-fach-Bestimmung an Prüfstäben der Abmessung 80 mm x 10 mm x 4 mm.

Die Glasübergangstemperatur des Polycarbonats ($T_g$ PC), die Schmelztemperatur des Polyesters ($T_m$ PET) sowie die Kristallisationstemperatur des Polyesters ($T_c$ PET) wurden mittels Differential Scanning Calorimetry (DSC) nach ISO 11357-3:2018 : Determination of temperature and enthalpy of melting and crystallization mit einem Mettler DSC 3+ Gerät bestimmt. Die Messung fand in einem Temperaturbereich von -40°C bis 320 °C mit einer Heizrate von 10 K/min in Stickstoffatmosphäre (50 ml $N_2$/min) statt. Dabei wurde mehrfach aufgeheizt und abgekühlt. $T_g$ wurde jeweils als Mittelpunkt des Glasüberganges beim zweiten Aufheizen und beim ersten Abkühlen ermittelt. $T_m$ wurde als Peaktemperatur beim zweiten Aufheizen und $T_c$ als Peaktemperatur beim ersten Abkühlen ermittelt.

Konnte die Schmelztemperatur des Polyesters ($T_m$ PET) und/oder die Kristallisationstemperatur des Polyesters ($T_c$ PET) aufgrund von instabilem Phasenverhalten / thermischer Schädigung des untersuchten Materials nicht ermittelt werden, so ist dies mit "nicht messbar" gekennzeichnet.

Die folgenden Beispiele dienen der weiteren Erläuterung der Erfindung.

**Tabelle 1**

| Komponente (Gewichtsteile) | | V1 | V2 | 3 | 4 | 5 | V6 | V7 | V8 | V9 | V10 | V11 |
|---|---|---|---|---|---|---|---|---|---|---|---|---|
| A-1 | | 61,2 | 61,1 | 60,7 | 60,7 | 60,7 | 61,2 | 61,2 | 61,2 | 60,7 | 61,4 | 61,4 |
| B-1 | | 22,5 | 22,5 | 23,0 | 23,0 | 23,0 | 22,5 | 22,5 | 22,5 | 23,0 | 22,6 | 22,6 |
| C-1 | | | | 0,010 | 0,025 | 0,050 | 0,010 | 0,025 | 0,050 | | 0,025 | 0,05 |
| C-2 | | | | | | | | | | 0,025 | | |
| D-1 | | 0,1 | 0,2 | 0,1 | 0,1 | 0,1 | | | | 0,1 | | |
| D-2 | | | | | | | 0,1 | 0,1 | 0,1 | | | |
| E-1 | | 0,2 | 0,2 | 0,2 | 0,2 | 0,2 | 0,2 | 0,2 | 0,2 | 0,2 | | |
| F | | 15,0 | 15,0 | 15,0 | 15,0 | 15,0 | 15,0 | 15,0 | 15,0 | 15,0 | 15,0 | 15,0 |
| G-1 | | 0,36 | 0,36 | 0,36 | 0,36 | 0,36 | 0,36 | 0,36 | 0,36 | 0,36 | 0,36 | 0,36 |
| G-2 | | 0,2 | 0,2 | 0,2 | 0,2 | 0,2 | 0,2 | 0,2 | 0,2 | 0,2 | 0,2 | 0,2 |
| G-3 | | 0,45 | 0,45 | 0,45 | 0,45 | 0,45 | 0,45 | 0,45 | 0,45 | 0,45 | 0,45 | 0,45 |
| **Eigenschaften** | Einheit | | | | | | | | | | | |
| Delta Vicat | °C | 16 | 12 | 2 | 1 | 1 | 4 | 2 | 2 | 3 | 2 | 2 |
| Izod Schlagzähigkeit 23°C | $kJ/m^2$ | 82 | 77 | 80 | 77 | 74 | 67 | 65 | 66 | 67 | 74 | 58 |
| $T_g$ PC (DSC) 2. Aufheizen | °C | 115 | 114 | 139 | 140 | 139 | 123 | 134 | 137 | 135 | 134 | 138 |
| $T_m$ PET (DSC) 2. Aufheizen | °C | n.m.* | n.m.* | 251 | 251 | 251 | 238 | 244 | 251 | 244 | 245 | 251 |
| $T_c$ PET (DSC) 1. Abkühlen | °C | n.m.** | n.m.** | 217 | 215 | 215 | 207 | 206 | 218 | 203 | 209 | 214 |
| $T_g$ PC (DSC) 1. Abkühlen | °C | 112 | 113 | 136 | 137 | 135 | 119 | 131 | 134 | 135 | 134 | 134 |

* n.m. = nicht messbar, d.h. Schmelztemperatur mittels DSC Messung nicht mehr bestimmbar

** n.m. = nicht messbar, d.h. Kristallisationstemperatur mittels DSC Messung nicht mehr bestimmbar

Tabelle 2

| Komponente (Gewichtsteile) | | V12 | V13 | 14 |
|---|---|---|---|---|
| A-2 | | 69,8 | 69,9 | 69,8 |
| B-2 | | 29,5 | 29,6 | 29,5 |
| C | | | 0,02 | 0,02 |
| D-1 | | 0,2 | | 0,2 |
| E-2 | | 0,2 | 0,2 | 0,2 |
| G-1 | | 0,36 | 0,36 | 0,36 |
| **Eigenschaften** | Einheit | | | |
| Delta Vicat | °C | 9 | 8 | 7 |
| Izod Schlagzähigkeit 23°C | $kJ/m^2$ | n.g. | n.g. | n.g. |
| $T_g$ PC (DSC) 2. Aufheizen | °C | 132 | 134 | 139 |
| $T_m$ PET (DSC) 2. Aufheizen | °C | 246 | 252 | 254 |
| $T_c$ PET (DSC) 1. Abkühlen | °C | **n.m. | 192 | 198 |
| $T_g$ PC (DSC) 1. Abkühlen | °C | 131 | 134 | 136 |
| n.g. = nicht gebrochen<br>** n.m. = nicht messbar, d.h. Kristallisationstemperatur mittels DSC Messung nicht mehr bestimmbar | | | | |

Aus Tabelle 1 geht hervor, dass die erfindungsgemäßen Zusammensetzungen enthaltend die Komponenten C, D und E die Herstellung von Formkörpern mit einer geringen Reduzierung der Wärmeformbeständigkeit nach hoher thermischer Belastung (Delta Vicat) in Verbindung mit verbesserter Schlagzähigkeit ermöglichen. Weiterhin zeigen die DSC Untersuchungen, dass bei den Komponenten Polycarbonat und Polyester sowohl beim mehrfachen Aufheizen als auch bei wiederholter Abkühlung die jeweiligen Übergangstemperaturen auf hohem Niveau sind und daher von einem guten Erhalt der Phasenseparation und Phasenstabilität ausgegangen werden kann.

Wird die Komponente C nicht eingesetzt (V1), so sinkt die Wärmeformbeständigkeit bei hoher thermischer Belastung deutlich und die Komponenten Polycarbonat und Polyester sind in unerwünschter Weise vermischt. Auch durch eine erhöhte Zugabe der Komponente D kann das Fehlen der Komponente C nicht ausgeglichen werden.

Wird als Komponente D kein Phosphonit, sondern ein Phosphit eingesetzt (V6, V7 und V8), so ist insbesondere die Zähigkeit nicht auf dem gewünschten Niveau.

Wird als Komponente C ein saures Phosphatsalz eingesetzt werden (V9), so ist die Zähigkeit ebenfalls reduziert und die Übergangstemperaturen sind erniedrigt.

Wird nur die erfindungsgemäße Komponente C eingesetzt, aber die Komponenten D und E fehlen, so ist bei gleicher Menge an Komponente C die Übergangstemperaturen erniedrigt (Bs.4 gegenüber V10). Dies lässt sich nicht durch eine höhere Menge der Komponente C ausgleichen, weil dann die Schlagzähigkeit deutlich abnimmt (V12).

Die Vorteile der Kombination der Komponenten C, D und E zeigt sich auch in Zusammensetzungen ohne mineralischen Füllstoff (Tabelle 2).

## Patentansprüche

**1.** Zusammensetzung zur Erzeugung einer thermoplastischen Formmasse, wobei die Zusammensetzung die folgenden Bestandteile enthält:

A) mindestens ein Polymer ausgewählt aus der Gruppe bestehend aus Polycarbonat und Polyestercarbonat,
B) mindestens ein Polyester,
C) phosphorige Säure,
D) mindestens ein Phosphonit,
E) mindestens ein sterisch gehindertes Phenol.

2. Zusammensetzung gemäß Anspruch 1, **dadurch gekennzeichnet, dass** die Komponente A ein aromatisches Polycarbonat ist und ein gewichtsgemitteltes Molekulargewicht $M_w$ bestimmt durch Gelpermeationschromatographie in Methlylenchlorid mit Polycarbonat auf Basis von Bisphenol A als Standard von 22 bis 28 kg/mol aufweist.

3. Zusammensetzung gemäß Anspruch 1 oder 2, **dadurch gekennzeichnet, dass** Komponente B ausgewählt ist aus der Gruppe bestehend aus Polyethylenterephthalaten und Polybutylenterephthalaten.

4. Zusammensetzung gemäß Anspruch 3, **dadurch gekennzeichnet, dass** als Komponente B ein Polyethylenterephthalat mit einer intrinsischen Viskosität von 0,58 dl/g bis 0,68 dl/g eingesetzt wird.

5. Zusammensetzung gemäß einem der vorhergehenden Ansprüche, enthaltend

40 bis 80 Gew.-% der Komponente A,
15 bis 45 Gew.-% der Komponente B,
0,005 bis 0,1 Gew.-% der Komponente C,
0,05 bis 1 Gew.-% der Komponente D,
0,05 bis 1 Gew.-% der Komponente E,
F) 0 bis 25 Gew.-% eines mineralischen Füllstoffs auf Basis von Talk und
G) 0 bis 20 Gew.-% mindestens eines Additivs ausgewählt aus der Gruppe bestehend aus Gleit- und Entformungsmitteln, Flammschutzmitteln, Flammschutzsynergisten, Leitfähigkeitsadditiven, UV/Licht-Schutzmitteln, Nukleierungsmitteln, Hydrolyseschutzmitteln, kratzfestigkeitsverbessernden Additiven, IR-Absorbentien, optischen Aufhellern, fluoreszierenden Additiven, Schlagzähmodifikatoren, Farbstoffen und Pigmenten sowie von Komponente F verschiedenen Füll- und Verstärkungsstoffen.

6. Zusammensetzung gemäß einer der vorherigen Ansprüche, **dadurch gekennzeichnet, dass** Komponente C als Feststoff eingesetzt wird.

7. Zusammensetzung gemäß einem der vorhergehenden Ansprüche, **dadurch gekennzeichnet, dass** der Anteil der Komponente C in der Zusammensetzung 0,01 bis 0,05 Gew.-% beträgt.

8. Zusammensetzung gemäß einem der vorhergehenden Ansprüche, **dadurch gekennzeichnet, dass** als Komponente D die Verbindung gemäß Struktur (5) eingesetzt wird.

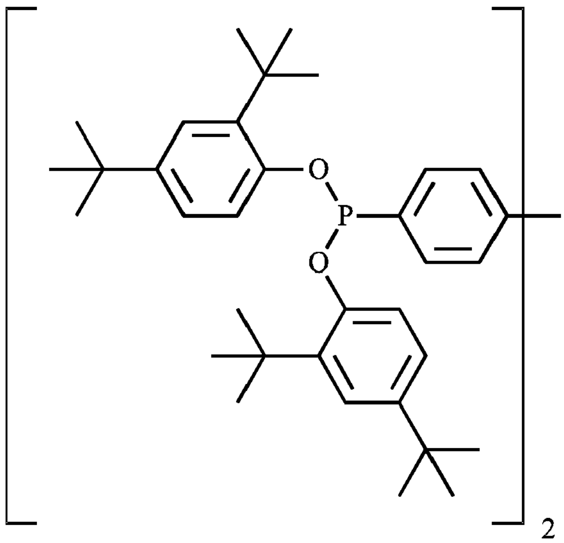

(5)

9. Zusammensetzung gemäß einem der vorhergehenden Ansprüche, **dadurch gekennzeichnet, dass** die Komponente F eine obere Korngröße $d_{95}$ kleiner 6 $\mu$m aufweist.

10. Zusammensetzung gemäß einem der vorherigen Ansprüche enthaltend keine von Komponente F verschiedene Füll- und Verstärkungsstoffe.

**11.** Zusammensetzung gemäß einem der vorherigen Ansprüche bestehend aus den Komponenten A bis G.

**12.** Verfahren zur Herstellung einer Formmasse, **dadurch gekennzeichnet, dass** die Bestandteile einer Zusammensetzung nach einem der Ansprüche 1 bis 11 bei einer Temperatur von 200 bis 320 °C miteinander vermischt und anschließend abgekühlt und granuliert werden.

**13.** Formmasse, erhältlich nach einem Verfahren nach Anspruch 12.

**14.** Verwendung einer Zusammensetzung nach einem der Ansprüche 1 bis 11 oder einer Formmasse nach Anspruch 13 zur Herstellung von Formkörpern.

**15.** Formkörper, erhältlich aus einer Zusammensetzung nach einem der Ansprüche 1 bis 11 oder aus einer Formmasse nach Anspruch 13.

Europäisches Patentamt
European Patent Office
Office européen des brevets

# EUROPÄISCHER RECHERCHENBERICHT

Nummer der Anmeldung
EP 21 15 5830

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A,D | EP 3 608 358 A1 (COVESTRO DEUTSCHLAND AG [DE]) 12. Februar 2020 (2020-02-12)<br>* Beispiele 2-4 *<br>* Ansprüche *<br>----- | 1-15 | INV.<br>C08L69/00 |
| A | EP 0 186 011 A2 (BASF AG [DE])<br>2. Juli 1986 (1986-07-02)<br>* Ansprüche 1,3 *<br>----- | 1-15 | |
| A | CN 109 666 278 A (DONGGUAN WANG PIN CORP)<br>23. April 2019 (2019-04-23)<br>* Ansprüche 1,5 *<br>----- | 1-15 | |
| | | | RECHERCHIERTE SACHGEBIETE (IPC) |
| | | | C08L |

1 Der vorliegende Recherchenbericht wurde für alle Patentansprüche erstellt

| Recherchenort | Abschlußdatum der Recherche | Prüfer |
|---|---|---|
| Den Haag | 28. Juni 2021 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 15 5830

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2021

| Im Recherchenbericht angeführtes Patentdokument | Datum der Veröffentlichung | Mitglied(er) der Patentfamilie | Datum der Veröffentlichung |
|---|---|---|---|
| EP 3608358 A1 | 12-02-2020 | CN 112533987 A | 19-03-2021 |
| | | EP 3608358 A1 | 12-02-2020 |
| | | KR 20210040971 A | 14-04-2021 |
| | | WO 2020030640 A1 | 13-02-2020 |
| EP 0186011 A2 | 02-07-1986 | DE 3445570 A1 | 19-06-1986 |
| | | EP 0186011 A2 | 02-07-1986 |
| | | US 4672086 A | 09-06-1987 |
| CN 109666278 A | 23-04-2019 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 8502622 A
- DE 2414849 A1
- EP 0417421 A1
- EP 3608358 A1
- US 4088709 A
- DE 2402367
- EP 0604074 A1
- EP 0114288 A2
- EP 0604080 A
- DE AS1495626 B
- DE 2232877 A
- DE 2703376 A
- DE 2714544 A
- DE 3000610 A
- DE 3832396 A
- DE 3007934 A
- DE 2842005 A
- US 3419634 A
- DE 3334782 A
- DE 2940024 A
- DE 2407674 A
- DE 2407776
- DE 2715932
- US 6455564 B1
- DE 1900270 A
- US 3692744 A


### In der Beschreibung aufgeführte Nicht-Patentliteratur


- **SCHNELL.** Chemistry and Physics of Polycarbonates. Interscience Publishers, 1964
- Kunststoff-Handbuch. Carl-Hanser-Verlag, 1973, vol. VIII, 695 ff
- *CHEMICAL ABSTRACTS,* 119345-01-6
- *CHEMICAL ABSTRACTS,* 6683-19-8
- *CHEMICAL ABSTRACTS,* 2082-79-3